(19) Europäisches Patentamt
European Patent Office
Office européen des brevets

(11) **EP 4 480 576 B1**

(12) **EUROPEAN PATENT SPECIFICATION**

(45) Date of publication and mention
of the grant of the patent:
**29.10.2025 Bulletin 2025/44**

(21) Application number: **23181204.1**

(22) Date of filing: **23.06.2023**

(51) International Patent Classification (IPC):
**B01J 8/18** (2006.01)     **B01J 19/00** (2006.01)
**B01J 19/18** (2006.01)     **B01J 19/24** (2006.01)

(52) Cooperative Patent Classification (CPC):
**B01J 8/1809; B01J 8/1836; B01J 19/0013;**
**B01J 19/1837; B01J 19/1862; B01J 19/2435;**
**B01J 19/245;** B01J 2208/00053; B01J 2219/0004;
B01J 2219/0006; B01J 2219/00243

(54) **METHOD FOR CONTROLLING THE PRODUCTION RATE OF A PROPYLENE HOMO- OR COPOLYMER IN A GAS PHASE REACTOR**

VERFAHREN ZUR STEUERUNG DER PRODUKTIONSRATE EINES PROPYLENHOMO- ODER -COPOLYMERS IN EINEM GASPHASENREAKTOR

PROCÉDÉ DE RÉGULATION DU TAUX DE PRODUCTION D'UN HOMO- OU COPOLYMÈRE DE PROPYLÈNE DANS UN RÉACTEUR EN PHASE GAZEUSE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.12.2024 Bulletin 2024/52**

(73) Proprietor: **Borealis GmbH
1020 Vienna (AT)**

(72) Inventors:
• **ZITTING, Samuli
06850 Kulloo (FI)**
• **MATIKAINEN, Piia
06850 Kulloo (FI)**
• **ELOVAINIO, Erno
06101 Porvoo (FI)**
• **KIVELÄ, Jouni
06101 Porvoo (FI)**

(74) Representative: **Kador & Partner Part mbB
Corneliusstraße 15
80469 München (DE)**

(56) References cited:
**EP-A2- 0 241 947**     **WO-A1-2017/025331**
**WO-A1-98/58975**

## Description

The present invention concerns a process for controlling the production rate of a propylene homo- or copolymer in a gas phase reactor of a multistage reactor system.

The heat removal from a gas phase reactor requires large gas flow and an appropriate compressor to provide sufficient pressure difference. To be able to minimize gas circulation, temperature difference of gas in/out to/from the gas reactor should be maximized as well as gas fluidizing velocity and reactor operating pressure. Typically no heat transfer agent is added to a reactor polymerizing propylene to maximize monomer and comonomer reactivity.

However, maximum operation temperature is limited with polymer grades having a low melting point and which are sticky, such as propylene ethylene copolymers containing 3 to 6 wt.% of ethylene. These grades are usually produced at lower operating temperatures, typically from 65 °C to 75 °C.

If one or more of comonomers have a higher weight average moleacular weight (Mw) than propylene, such as 1-butene or 1-hexene, the dew point of the circulation gas in the gas phae reactor will increase and further reduce possible temperature differences of the reactor.

Condensing mode operation has been used to limiting investment costs at least when producing products with limited operation temperature with high dew point of the circulation gas. When operating in condensed mode, the heat of reaction is challenging to calculate from the polymerisation reactor parameters. The major part of energy is removed in a narrow temperature range when condensing happens.

Process parameters for a reactor can be easily controlled and adjusted by utilising the material balance in case only one reactor is in operation. However, if more than one reactor is operated and the flow between the reactors cannot be measured or determined, controlling and producing different polymer materials in reactors is a challenge.

EP 0 241 947 discloses a method for controlling the temperature of a fluidized bed during the production of polymers in a fluidized bed reactor by an exothermic polymerization reaction, which comprises continuously introducing into the bed a stream of gas cooled to below the maximum desired temperature within said bed and simultaneously or separately introducing a stream of liquid into said reactor under conditions such that an essentially uniform two-phase mixture of said gas and liquid is introduced in said bed at a level below the region of maximum desired temperature within said reactor. WO2017/025331 discloses a process for controlling the temperature of a polymerization gas phase reactor.

It is an object of the present invention to provide a process for determining and controlling the production rate of a propylene homo- or copolymer in a gas phase reactor, in particular in a cost saving and easy manner.

It is a further object of the invention to provide a process for determining the condensing degree in a gas phase reactor of a multistage reactor system.

It is another object of the invention to provide a process which enables calculating the split between a gas phase reactor and the upstream reactors.

The invention is based on the finding that the heat balance of a gas phase reactor can be calculated based on parameters of the cooling medium system associated to the gas phase reactor. Thus, the production rate of the polypropylene homo-or copolymer in the gas phase reactor as well as the split between the gas phase reactor and the previous reactors can also be calculated and controlled.

The invention thus provides a process for controlling the production rate of a propylene homo- or copolymer in a selected gas phase reactor of a multistage reactor system, the multistage reactor system comprising a first reactor and one or more gas phase reactor(s) downstream of the first reactor, wherein each gas phase reactor is equipped with a gas circulation line, a circulation gas compressor and a circulation gas cooler, wherein the circulation gas cooler comprises a cooling medium inlet, a cooling medium outlet and a cooling circuit, the process comprising the steps of

a) polymerizing propylene and optional comonomer in the first reactor and the one or more gas phase reactor(s),

wherein in each gas phase reactor a polypropylene homo- or copolymer is produced by feeding a circulation gas via the gas circulation line into the gas phase reactor and at the same time feeding cooling medium (cm) through the cooling circuit of the circulation gas cooler, wherein the cooling medium (cm) has a temperature $T_{cm\_in}$ at the cooling medium inlet of the circulation gas cooler and a temperature $T_{cm\_out}$ at the cooling medium outlet of the circulation gas cooler,

wherein the circulation gas comprises propylene and optional comonomer and wherein the circulation gas is cooled by indirect heat exchange with the cooling medium (cm) in the cooling circuit of the circulation gas cooler,

b) selecting one gas phase reactor (GPR) from the one or more gas phase reactor(s) of the multistage reactor system as the selected gas phase reactor,

c) calculating the production rate Z - X (kg/h) of the propylene homo- or copolymer produced in the selected gas phase reactor by formula (1)

$$Z - X = \frac{P - (R + (Y-X) \cdot \Delta H_{Y-X} + X \cdot \Delta H_X)}{E}$$

d) controlling the production rate Z - X (kg/h) of the propylene homo- or copolymer produced in the selected gas phase reactor (GPR) by using the calculated production rate Z-X (kg/h) of step c),

wherein

total production Z of solid propylene homo- or copolymer (kg/h) = (feed into all reactors of the multistage reactor system) - (liquids and gas withdrawn from all reactors of the multistage reactor system),

$P = \Delta T_{cm} \cdot Cp_{cm} \cdot MFem$, with $\Delta T_{cm} = T_{cm\_out} - T_{cm\_in}$ of the cooling medium (cm) at the circulation gas cooler in °C of the selected gas phase reactor (GPR),

$Cp_{cm}$ being the specific heat capacity (J kg$^{-1}$ °C$^{-1}$) of the cooling medium (cm),

$MF_{cm}$ being the mass flow (kg/h) of the cooling medium (cm) in the cooling circuit of the selected gas phase reactor (GPR),

production rate X (kg/h) of propylene homo- or copolymer transferred from the upstream reactor to the selected gas phase reactor,

total feed rate Y (kg/h) from upstream reactor to the selected gas phase reactor,

duties R (kJ/h) other than feed from the upstream reactor,

$\Delta H_{Y-X}$ = enthalpy change (kJ/kg) of the liquid / gas transferred from the upstream reactor to the selected gas phase reactor,

$\Delta H_X$ = enthalpy change (kJ/kg) of the propylene homo- or copolymer transferred from the upstream reactor to the selected gas phase reactor, and

E is the average heat of reaction in the selected GPR, with E = heat of reaction(propylene) · (propylene content of product produced in the selected gas phase reactor) + Σ [(heat of reaction(comonomer)) · (comonomer content of product produced in the selected gas phase reactor)], and

wherein the upstream reactor is the reactor located directly upstream of the selected gas phase reactor.

The present invention offers a number of advantages. The process of the invention not only allows the determination of the production rate of a propylene homo- or copolymer in a selected gas phase reactor, but at the same time also allows the adjusting or controlling of this production rate.

A further advantage is that this determination is done in a cost saving and easy manner. Namely, the heat balance can be calculated from parameters of the cooling medium system associated to the gas phase reactor in which the propylene homo- or copolymer is produced. From the heat balance, the production rate of the polypropylene homo- or copolymer in the gas phase reactor can be easily and reliably determined.

A further advantage is that the condensing degree can be calculated from parameters of the cooling medium system associated to the gas phase reactor, allowing to easily operate the gas phase reactor in condensed mode.

Another advantage is that also the split between the selected gas phase reactor and the previous reactors can be calculated from parameters of the cooling medium system associated to the gas phase reactor.

In step a) of the process according to the invention, propylene and optional comonomer is polymerized in the first reactor and the one or more gas phase reactor(s) of the multistage reactor system.

The multistage reactor system comprises, or consists of, a first reactor and one or more gas phase reactor(s) downstream of the first reactor. Multistage reactor system also means that the reactors are arranged in series. In case only one gas phase reactor is present in the multistage reactor system, then this gas phase reactor is labelled the first gas phase reactor. In case two gas phase reactors are present in the multistage reactor system, then the gas phase reactors are labelled first gas phase reactor and second gas phase reactor, with the second gas phase reactor downstream of the first gas phase reactor. The same pertains in case three gas phase reactors are present, with the third reactor being downstream of the second gas phase reactor.

Preferably, the multistage reactor system comprises, or consists of, the first reactor and two or three gas phase reactors downstream of the first reactor. In other words, the multistage reactor system comprises, or consists of, the first reactor, a first gas phase reactor downstream of the first reactor, a second gas phase reactor downstream of the first gas phase reactor and optionally a third gas phase reactor downstream of the second gas phase reactor.

A preferred multistage reactor system is a "loop - gas phase"-reactor system, such as developed by Borealis (known as Borstar® technology) described e.g. in patent literature, such as in EP 0 887 379, WO 92/12182, WO 2004/000899, WO 2004/111095, WO 99/24478, WO 99/24479 or in WO 00/68315.

Preferably, the multistage reactor system further comprises a prepolymerisation reactor upstream of the first reactor. The prepolymerisation reactor is preferably a loop reactor. Prepolymerisation is known in the art.

Preferably, the first reactor is a slurry reactor. The slurry reactor is preferably a loop reactor or a continuous stirred tank reactor, more preferably a loop reactor. Loop reactors are generally known in the art and examples are given, for instance, in US-A-4582816, US-A-3405109, US-A-3324093, EP-A-479186 and US-A-5391654. In such reactors, a slurry is circulated with a high velocity along a closed pipe by using a circulation pump.

Preferably, a second reactor is located downstream of the first reactor and upstream of the one or more gas phase reactors. The second reactor is preferably a slurry reactor. The slurry reactor is preferably a loop reactor.

Operation and operating conditions of a slurry reactor, such as a loop reactor, for producing a propylene homo- or copolymer are known in the art. The first reactor and/or the second reactor are typically operated at a temperature from 60 to 100 °C, more preferably 65 to 90 °C, and most preferably 70 to 80 °C and/or at a pressure preferably from 1 to 150 bar, more preferably 35 to 60 bar, even more preferably 40 to 55 bar, and most preferably 43 to 52 bar. Hydrogen is typically introduced into the reactor for controlling the $MFR_2$ of the propylene homo- or copolymer produced. Any catalyst suitable for producing a propylene homo- or copolymer can be used in the present invention, such as a metallocene catalyst.

Preferably, the multistage reactor system further comprises means for feeding propylene and/or comonomer and/or hydrogen to the first reactor and/or the second reactor, if present.

Downstream of the first reactor or, if present, the second reactor, the one or more gas phase reactors are located. The slurry from the first reactor or, if present, from the second reactor is transferred to the gas phase reactor downstream of the first reactor or downstream of the second reactor. The slurry is preferably transferred via a direct feed line between the first rector or second reactor and the gas phase reactor. The slurry comprises propylene homo- or copolymer produced, unreacted monomer and/or comonomer.

The gas phase reactor(s) used in the process of the invention can be any suitable gas phase reactor known in the art, such as preferably a fluidized bed gas phase reactor.

Operation and operating conditions of a gas phase reactor, such as a fluidized bed gas phase reactor, are known in the art. Typically, the reaction temperature used will generally be in the range 30 to 90 °C, the gas phase reactor pressure will generally be in the range 10 to 40 bar. Any catalyst suitable for producing a propylene homo- or copolymer can be used, such as a metallocene catalyst.

Preferably, the one or more gas phase reactors comprise means for feeding propylene and/or comonomer and/or hydrogen to the one or more gas phase reactor(s). Apart thereof, the one or more gas phase reactors comprise a circulation gas outlet, a circulation gas inlet and a product outlet for withdrawing produced propylene homo-or copolymer as known in the art.

Each gas phase reactor of the multistage reactor system is further equipped with a gas circulation line, circulation gas compressor and circulation gas cooler. The circulation gas is fed via the gas circulation line into the gas phase reactor, preferably via the circulation gas inlet into the gas phase reactor. The circulation gas is preferably fed into the circulation gas line via a circulation gas line inlet upstream of the circulation gas cooler and downstream of the gas phase reactor. The circulation gas flows in an upward direction through the gas phase reactor.

**In** each gas phase reactor a polypropylene homo- or copolymer is produced by feeding a circulation gas via the gas circulation line into the gas phase reactor and polymerizing propylene and optional comonomer in the presence of a catalyst in the gas phase reactor. At the same time cooling medium (cm) is fed through the cooling circuit of the circulation gas cooler, wherein the cooling medium (cm) has a temperature $T_{cm\_in}$ at the cooling medium inlet of the circulation gas cooler and a temperature $T_{cm\_out}$ at the cooling medium outlet of the circulation gas cooler.

The circulation gas comprises propylene and optional comonomer. The comonomer preferably comprises, or consists of, ethylene, 1-butene, 1-hexene and/or 1-octene. The circulation gas typically further comprises a non-reactive gas such as nitrogen or a low boiling point hydrocarbons such as propane and/or hydrogen, more preferably the circulation gas further comprises hydrogen.

The circulation gas cooler comprises a cooling medium inlet, a cooling medium outlet and a cooling circuit. The cooling circuit is preferably a closed loop cooling circuit. The cooling medium can be circulated in the cooling circuit by a pump. The cooling medium is fed via the cooling medium inlet into the cooling circuit and through the circulation gas cooler, and exits via the cooling medium outlet. The circulation gas cooler gas further comprises a circulation gas cooler gas inlet and a circulation gas cooler gas outlet.

Preferably, the circulation gas cooler is a heat exchanger, preferably an indirect heat exchanger. The heat exchanger is preferably a heat exchanger with a closed loop cooling circuit.

Preferably, the circulation gas compressor is located downstream of the gas phase reactor or the circulation gas compressor is located upstream of the gas phase reactor.

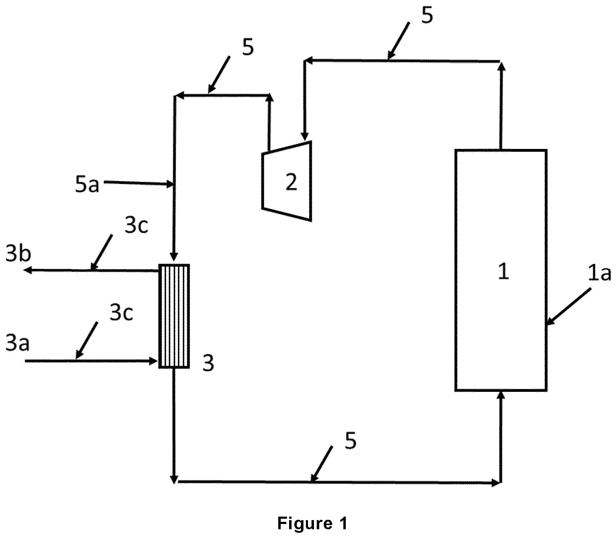

In the first embodiment, the circulation gas compressor is located downstream of the gas phase reactor, and the circulation gas cooler is located downstream of the circulation gas compressor. This is shown in Figure 1 below. In this first embodiment, the gas circulation line transfers the circulation gas exiting from the circulation gas outlet of the gas phase reactor into the circulation gas compressor, from which the circulation gas is further transferred to the circulation gas cooler and transferring the circulation gas back into the gas phase reactor via the circulation gas inlet of the gas phase reactor.

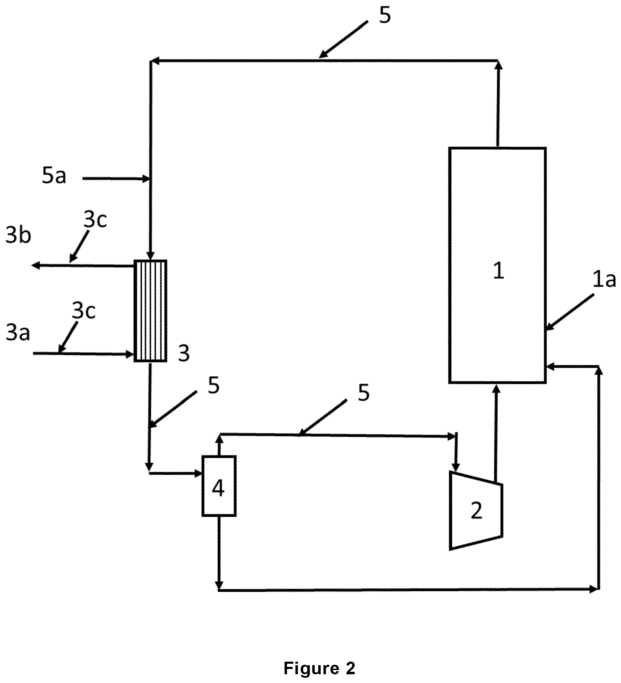

In the second embodiment, the circulation gas compressor is located upstream of the gas phase reactor and the gas phase reactor is further equipped with a condensate separator. Reference is made to Figure 2. In this second embodiment, the circulation gas cooler is located downstream of the gas phase reactor, the condensate separator is located downstream of the circulation gas cooler, and the circulation gas compressor is located downstream of the condensate separator. The condensate separator condenses at least a part of the circulation gas exiting the circulation gas cooler.

In this second embodiment, the gas circulation line transfers the circulation gas exiting from the circulation gas outlet of the gas phase reactor into the circulation gas cooler, from which the circulation gas is further transferred to the condensate separator and finally a condensate portion of the circulation gas exiting at a bottom outlet of the condensate separator is transferred back into the gas phase reactor. Circulation gas exiting a top outlet of the condensate separator is directed via the gas circulation line into the circulation gas compressor, and the compressed circulation gas being further fed back into the gas phase reactor via the circulation gas inlet of the gas phase reactor.

The arrangement of this second embodiment is further reducing the amount of circulation gas going into the circulation gas compressor and provides a possibility to measure the condensation or condensing degree, such as via a flow meter and level controller to vessel for controlling liquid level. The condensate portion of the circulation gas is returned into the gas phase reactor via the circulation gas inlet of the gas phase reactor either by pumping or by gravity.

The circulation gas exiting the circulation gas outlet of the gas phase reactor is heated by the heat of polymerization produced within the gas phase reactor. The circulation gas is subsequently cooled by indirect heat exchange with the cooling medium (cm) in the cooling circuit of the circulation gas cooler. In other words, at least a part of the polymerization heat is transferred to the cooling medium (cm) in the circulation gas cooler. Accordingly, the cooling medium (cm) has a temperature $T_{cm\_out}$ at the cooling medium outlet of the circulation gas cooler usually higher than the temperature $T_{cm\_in}$ at the cooling medium inlet of the circulation gas cooler. Preferably, the cooling medium (cm) has a temperature $T_{cm\_in}$ at the cooling medium inlet of the circulation gas cooler of between 40 °C and 60 °C, more preferably 45 °C to 55 °C. The cooled circulation gas is redirected back into the gas phase reactor. Thus, the indirect heat exchange provides an efficient temperature control for the gas phase reactor.

Preferably, the cooling medium (cm) comprises, or consists of, water. **In** step b) of the process according to the invention one gas phase reactor from the one or more gas phase reactor(s) of the multistage reactor system is selected. This selected gas phase reactor is the reactor the operator wishes to determine and control the production rate of the propylene homo- or copolymer.

In step c) of the process according to the invention, the production rate Z - X (kg/h) of the propylene homo- or copolymer produced in the selected gas phase reactor is calculated according to formula (1). Formula (1) thus enables the calculation of the production rate Z - X (kg/h) of the propylene homo- or copolymer produced in the selected gas phase reactor, which calculation then allows, in turn, the desired controlling of the production rate Z - X.

The calculation includes that produced propylene homo- or copolymer and any excess gas and liquid from the upstream reactor(s) is fed directly into the selected gas phase reactor.

The upstream reactor is the reactor located directly upstream of the selected gas phase reactor. If the upstream reactor is a slurry reactor, no extra heat input is needed to vaporize or separate liquid/gases from polymer product. Rather, the liquid from the slurry reactor transferred to the gas phase reactor is acting as cooling medium and removing part of the reaction heat upon vaporization. This heat removal is reducing the condensing need at the gas circulation cooler.

If the upstream reactor is a gas phase reactor, the gas flow from the upstream reactor can be directly fed to the selected gas phase reactor. However, the gas flow cannot be measured between reactors and thus a comprehensive material balance cannot be calculated for the reactors.

To be able to control and calculate production rate and condensing degree, heat balance and condensing degree has to be calculated from cooling medium circulation. Flows to the reactors to be measured by feed flow meters. The total production Z can be calculated by material balance over all the reactors. The gas phase reactor heat balance calculation will give the production rate of the selected gas phase reactor as well as the split between the previous reactors and the gas phase reactor.

The total production Z of solid propylene homo- or copolymer (kg/h) is calculated by (feed into all reactors of the multistage reactor system) - (liquids and gas withdrawn from all reactors of the multistage reactor system). The feed into all reactors of the multistage reactor system comprises the sum of the propylene feed (kg/h), comonomer(s) feed(s) (kg/h) as well as hydrogen feed (kg/h), except the catalyst feed, into all reactors of the multistage reactor system. The liquids and gas withdrawn from all reactors of the multistage reactor system comprises the sum of all liquids (kg/h) and gas (kg/h) withdrawn from all reactors.

This difference between feeds into all the reactor and liquid/gas withdrawn from all the reactors yields the total production Z of the solid propylene homo- or copolymer (kg/h) coming out from the final or last reactor of the multistage reactor system.

Parameter P is calculated as $P = \Delta T_{cm} \cdot Cp_{cm} \cdot MFem$, with $\Delta T_{cm} = Tem\_out - T_{cm\_in}$ of the cooling medium (cm) at the circulation gas cooler in °C of the selected gas phase reactor, $Cp_{cm}$ being the specific heat capacity ($J\ kg^{-1}\ °C^{-1}$) of the cooling medium (cm) of the selected gas phase reactor (GPR), and $MF_{cm}$ being the mass flow (kg/h) of the cooling medium (cm) in the cooling circuit of the selected gas phase reactor.

The production rate X (kg/h) of propylene homo- or copolymer transferred from the upstream reactor to the selected gas phase reactor is typically not known or cannot be measured. The production rate X (kg/h) is the sum of all propylene homo- or copolymers (kg/h) produced in the reactor(s) upstream of the selected gas phase reactor which are then transferred to the selected gas phase reactor from the reactor directly upstream of the selected gas phase reactor. Calculating and providing the production rate X (kg/h) of propylene homo- or copolymer transferred from the upstream reactor allows the determination of the production rate Z - X (kg/h) of the propylene homo- or copolymer produced in the selected gas phase reactor, and thus also controlling the production rate Z - X (kg/h).

The total feed rate Y (kg/h) is the rate of the feed comprising all the liquids, gas and solids from the upstream reactor into the selected gas phase reactor. Typically, this feed comprises the solid propylene homo- or copolymer produced in the upstream reactor(s), unreacted propylene and unreacted hydrogen.

Duties R (kJ/h) is other than feed from the upstream reactor. Thus, duties R (kJ/h) is the sum of all power quantities (energy per time unit) which are other than feed from the upstream reactor. Preferably, the duties R comprise compressor heating duty, heat losses from reactor system to atmosphere, feeds cooling/heating effect.

$\Delta H_{Y-X}$ is the enthalpy change (kJ/kg) of the liquid / gas transferred from the upstream reactor to the selected gas phase reactor. The enthalpy change is dependent on pressure and temperature, and can be determined by physical property methods such as Redlich-Kwong-Soave (RKS) based on the gas composition in the reactor (calculated by material balance and also analysed by gas chromatography or other methods from gas) and the condensing composition.

$\Delta H_X$ is the enthalpy change (kJ/kg) of the propylene homo- or copolymer transferred from the upstream reactor to the selected gas phase reactor. The enthalpy change is dependent on pressure and temperature. As the propylene homo- or copolymer is usually transferred in the form of a powder, i.e. in the form of a solid, $\Delta H_X$ is typically 0 kJ/kg.

The average heat of reaction E in the selected gas phase reactor (GPR) is the heat of reaction (propylene) · (propylene content of product produced in the selected gas phase reactor) + $\Sigma$ [(heat of reaction (comonomer)) · (comonomer content of product produced in the selected gas phase reactor)]. The average reaction heat can be found e.g. in the literature.

The heat of reaction for propylene depends primarily on the degree of crystallization and the reactor conditions, i.e. temperature and pressure, and is typically in a range of 2200 kJ/kg to 2500 kJ/kg. In case a propylene copolymer is produced, the comonomer(s) heat of formation(s) have to be also taken into account. For example, in case the propylene copolymer contains ethylene, 1-butene and/or 1-hexene as comonomer, the heat of production of these comonomer(s) need to be considered, which are: ethylene heat of production = 3700 kJ/kg, 1-butene heat of reaction = 1545 kJ/kg and 1-hexene heat of reaction = 988 kJ/kg. Heat of formation for other comonomers can be found in the literature.

The comonomer content(s) reacting to the final propylene copolymer can be evaluated from the overall material balance over all the reactors and powder samples.

Preferably, the selected gas phase reactor is operated in condensed mode. Condensed mode means that the condensing degree of the circulation gas is in the range of >0 to 15 %, preferably in the range of 5 to 15 %, at the circulation gas cooler. The condensing degree is calculated according to formula (2):

*condensing degree* (%)

$$= \frac{[\Delta T_{cm} \cdot Cp_{cm} \cdot MF_{cm}] - [\Delta T_{gas} \cdot Cp_{gas} \cdot MF_{gas}]}{C_{gas} \cdot MF_{gas}} \cdot 100$$

$$(2)$$

with

$\Delta T_{cm} = T_{cm\_out} - T_{cm\_in}$ of the cooling medium (cm) in °C at the cooling medium outlet and the cooling medium inlet of the circulation gas cooler of the selected gas phase reactor,

$Cp_{cm}$ being the specific heat capacity (J kg$^{-1}$ °C$^{-1}$) of the cooling medium (cm),

$MF_{cm}$ being the mass flow (kg/h) of the cooling medium (cm) in the cooling circuit of the selected gas phase reactor,

$\Delta T_{gas} = T_{gas\_in} - T_{gas\_out}$ of the circulating gas in °C at the circulation gas cooler gas inlet and the circulation gas cooler gas outlet,

$Cp_{gas}$ being the specific heat capacity (J kg$^{-1}$ °C$^{-1}$) of the circulation gas and measured on the circulation gas coming out from the selected gas phase reactor,

$MF_{gas}$ being the mass flow (kg/h) of the circulation gas in the gas circulation line,

$C_{gas}$ being the heat of condensation (J/kg) of the circulation gas in the selected gas phase reactor.

The heat of condensation $C_{gas}$ can be determined by physical property methods such as Redlich-Kwong-Soave (RKS).

Typically, the monomer propylene is the main condensing component in the circulation gas cooler.

Controlling the production rate Z - X in step d) can be done in one or more ways. Preferably, the controlling in step d) is done by adjusting the bed level in the selected gas phase reactor and/or by adjusting the propylene partial pressure in the selected gas phase reactor and/or by adjusting the comonomer partial pressure in the selected gas phase reactor and/or the bed temperature of the gas phase reactor.

Fluidized bed gas phase reactors comprise a fluidized bed in which the polymerisation catalyst is supported on an inert substrate. The level of this bed can be increased, which in turn increases polymer mass and thus residence time. The residence time affects linearly to production rate. Furthermore, increasing the propylene and comonomer partial pressure in the selected gas phase reactor affects nearly linearly the production rate. Also the temperature of the bed of the selected gas phase reactor can be increased which, in turn, increases the Ziegler-Natta catalyst productivity increases up to certain, catalyst depending temperature. Adjusting the aforementioned parameters is well known in the art.

The invention is further described and illustrated in the following figures and nonlimiting example. The figures show

Figure 1 an embodiment according to the invention showing the selected gas phase reactor including gas circulation line, circulation gas compressor and circulation gas cooler, and

Figure 2 another embodiment according to the invention showing the selected gas phase reactor including gas circulation line, circulation gas compressor, circulation gas cooler and condensate separator.

The following reference signs in the figures are used:

1    selected gas phase reactor

1a    inlet for feed from previous reactor(s) into the selected gas phase reactor

2    circulation gas compressor

3    circulation gas cooler

3a    cooling medium inlet

3b    cooling medium outlet

3c    cooling circuit

4    condensate separator

5    gas circulation line

5a    gas circulation line inlet

In a first embodiment according to the invention shown in Figure 1, the circulation gas compressor (2) is located downstream of the selected gas phase reactor (1), and the circulation gas cooler (3) is located downstream of the circulation gas compressor (2). In this first embodiment, the gas circulation line (5) transfers the circulation gas exiting from the circulation gas outlet of the gas phase reactor (1) into the circulation gas compressor (2) from which the compressed circulation gas is further transferred to the circulation gas cooler (3) and transferring the circulation gas back into the gas phase reactor (1) via the circulation gas inlet of the gas phase reactor (1). The circulation gas cooler (3) comprises a cooling circuit (3c) into which a cooling medium, such as water, is introduced via a cooling medium inlet (3a). The cooling medium exits the cooling circuit (3c) via cooling medium outlet (3b).

In a second embodiment according to the invention shown in Figure 2, the circulation gas compressor (2) is located upstream of the selected gas phase reactor (1) and the gas phase reactor (1) is further equipped with a condensate separator (4). In this second embodiment, the circulation gas cooler (3) is located downstream of the gas phase reactor (1), the condensate separator (4) is located downstream of the circulation gas cooler (3), and the circulation gas compressor (2) is located downstream of the condensate separator (4). The condensate separator (4) condenses at least a part of the circulation gas exiting the circulation gas cooler (3).

In this second embodiment, the gas circulation line (5) transfers the circulation gas exiting from the circulation gas outlet of the gas phase reactor (1) into the circulation gas cooler (3), from which the circulation gas is further transferred to the condensate separator (4). A condensate portion of the circulation gas exiting at a bottom outlet of the condensate separator (4) is transferred back via a separate line into the gas phase reactor (1). Circulation gas exiting a top outlet of the condensate separator (4) is directed via the gas circulation line (5) into the circulation gas compressor (2) for compression, and the compressed circulation gas being further fed back into the gas phase reactor (1) via the circulation gas inlet of the gas phase reactor (1). Also in this second embodiment, the circulation gas cooler (3) comprises a cooling circuit (3c) into which a cooling medium, such as water, is introduced via a cooling medium inlet (3a). The cooling medium exits the cooling circuit (3c) via cooling medium outlet (3b).

## EXAMPLE SECTION

In the following example a multistage reactor system comprising a loop reactor as first reactor and a subsequent gas phase reactor (GPR) (see Figure 1) was simulated with "Aspen Plus" software. In this example, the loop reactor is operated at 70 °C and 50 bar and the selected GPR (1) is operated at 70 °C and 25 bar. The composition of the circulation gas is 1 mol% hydrogen, 2 mol% ethylene and 10 mol% propane (impurity at feed propylene, accumulating to process) and rest being propylene. The circulation gas is fed into the gas circulation line (5) upstream of the circulation gas cooler via gas circulation line inlet (5a) and the feed rate is 10 000 kg/h. The circulation gas compressor (2) is used for circulating the circulation gas via the circulation gas line (5) through the circulation gas cooler (3) and fluidizing the polymer bed in the selected GRP (1). The cooling medium inlet temperature $T_{cm\_in}$ is 50 °C, and the cooling medium outlet temperature $T_{cm\_out}$ is 57.7 °C, cooling medium (cm) mass flow $MF_{cm}$ is 2 000 000 kg/h, other duties, R, are 180 000 kJ/h. Water was used as the cooling medium (cm), with the specific heat capacity $Cp_{cm}$ of water being 4.18 kJ/(kg · °C).

The total production Z of the propylene-ethylene copolymer produced is 60 000 kg/h. The enthalpy change $\Delta H_{Y-X}$ of the liquid is 242 kJ/kg and the enthalpy change $\Delta H_X$ for the powder is 0 kJ/kg. The enthalpy changes are determined via physical property model Redlich-Kwong-Soave (RKS) included in the "Aspen plus" software. The heat of polymerization in the selected GPR is 2400 kJ/kg and the total feed Y from previous reactors is 60 000 kg/h. The previous reactor operates at a temperature of 70°C and a pressure of 50 bar.

The previous reactor production rate X (kg/h) can be calculated from formula (1) as follows:

60 000 kg/h - X = [(57.7 °C - 50 °C) · 4.18 kJ/(kg · °C) · 2 000 000 kg/h - (180 000 kJ/h + (60 000 kg/h - X) · 242 kJ/kg + X · 0 kJ/kg] / 2400 kJ/kg

Solving the equation yields for X (previous reactor production rate) 30 000 kg/h produced in the upstream loop reactor. The production rate (Z - X) of the selected GPR is thus 30 000 kg/h.

The total gas flow $MF_{gas}$ is 1 400 000 kg/h, the temperature $T_{cg\_in}$ of the circulation gas is 71.5 °C and the temperature $T_{cg-out}$ of the circulation gas from the cooler is 59.9 °C. The condensing degree can be calculated according to formula (2) herein:

condensing degree = [(57.7 °C - 50 °C) * 4.18 kJ/(kg · °C) * 2 000 000 kg/h - 1400 000 kg/h * 2.32 kJ/(kg · °C) * (71.5 °C - 59.9 °C)] · 100 / 240 kJ/kg / 1 400 000 kg/h = 7.8 %

For this calculation of the condensing degree according to formula (2), first the specific heat capacity $Cp_{gas}$ of the circulation gas was calculated to be 2.32 kJ/(kg · °C) using "Aspen plus" software and the heat of condensation $C_{gas}$ of the circulation gas was calculated to be 240 kJ/kg using "Aspen plus" software.

Hence, operating the reactor under the conditions given above leads to a condensing degree of 7.8 %, i.e. the selected gas phase reactor operates in condensed mode. Gas dew point is 60.1°C so condensation degree is not possible to follow from process side. Condensing in circulation gas cooler is removing about 36 %, direct feed 10 % and cooling in circulation gas cooler 54 % of the total heat.

The circulation gas flow velocity (m/s) is the gas volume flow ($m^3$/s) / [(diameter (m))^2 · $\pi$/4], with the gas volume flow ($m^3$/s) being the mass flow (kg/s) / density (kg/$m^3$). The density (kg/$m^3$) is calculated as [pressure (kPa) · molar mass (kg/mol)] / [temperature (K) · compressibility - gas constant (kg·$m^2$/($s^2$·K·mol))]. The gas composition, pressure as well as the mass flow are known, and the compressibility is determined using "Aspen plus" software.

By this arrangement and the calculated 0.6 m/s circulation gas flow velocity inside the 4 m diameter gas phase reactor, the selected GPR is producing 30 000 kg/h of a propylene-ethylene copolymer (random grade, 97 wt.% propylene and 3 wt.% ethylene as reactor product).

## Claims

1. Process for controlling the production rate of a propylene homo- or copolymer in a selected gas phase reactor (1) of a multistage reactor system, the multistage reactor system comprising a first reactor and one or more gas phase reactor(s) downstream of the first reactor, wherein each gas phase reactor is equipped with a gas circulation line (5), a circulation gas compressor (2) and a circulation gas cooler (3), wherein the circulation gas cooler (3) comprises a cooling medium inlet (3a), a cooling medium outlet (3b) and a cooling circuit (3c),

   the process comprising the steps of

   a) polymerizing propylene and optional comonomer in the first reactor and the one or more gas phase reactor(s),

   wherein in each gas phase reactor a polypropylene homo- or copolymer is produced by feeding a circulation gas via the gas circulation line (5) into the gas phase reactor and at the same time feeding cooling medium (cm) through the cooling circuit (3c) of the circulation gas cooler (3), wherein the cooling medium (cm) has a temperature $T_{in}$ at the cooling medium inlet (3a) of the circulation gas cooler (3) and a temperature $T_{out}$ at the cooling medium outlet (3b) of the circulation gas cooler (3),
   wherein the circulation gas comprises propylene and optional comonomer and wherein the circulation gas is cooled by indirect heat exchange with the cooling medium (cm) in the cooling circuit (3c) of the circulation gas cooler (3),

   b) selecting one gas phase reactor (GPR) from the one or more gas phase reactor(s) of the multistage reactor system as the selected gas phase reactor (1),
   c) calculating the production rate Z - X (kg/h) of the propylene homo- or copolymer produced in the selected gas phase reactor (1) by formula (1)

$$Z - X = \frac{P - (R + (Y - X) \cdot \Delta H_{Y-X} + X \cdot \Delta H_X)}{E}$$

(1)

   d) controlling the production rate Z - X (kg/h) of the propylene homo- or copolymer produced in the selected gas phase reactor (1) by using the calculated production rate Z - X (kg/h) of step c),

wherein

total production Z of solid propylene homo- or copolymer (kg/h) = (feed into all reactors of the multistage reactor system) - (liquids and gas withdrawn from all reactors of the multistage reactor system),

$P = \Delta T_{cm} \cdot Cp_{cm} \cdot MF_{cm}$, with $\Delta T_{cm} = T_{cm\_out} - T_{cm\_in}$ of the cooling medium (cm) at the circulation gas cooler in °C of the selected gas phase reactor (GPR),

$Cp_{cm}$ being the specific heat capacity (J kg$^{-1}$ °C$^{-1}$) of the cooling medium (cm) in the cooling circuit of the selected gas phase reactor (GPR),

$MF_{cm}$ being the mass flow (kg/h) of the cooling medium (cm) in the cooling circuit of the selected gas phase reactor (GPR),

production rate X (kg/h) of propylene homo- or copolymer transferred from the upstream reactor to the selected gas phase reactor,

total feed rate Y (kg/h) from upstream reactor to the selected gas phase reactor,

duties R (kJ/h) other than feed from the upstream reactor,

$\Delta H_{Y - X}$ = enthalpy change (kJ/kg) of the liquid / gas transferred from the upstream reactor to the selected gas phase reactor,

$\Delta H_X$ = enthalpy change (kJ/kg) of the propylene homo- or copolymer transferred from the upstream reactor to the selected gas phase reactor, and

E is the average heat of reaction in the selected GPR, with E = heat of reaction(propylene) · (propylene content of product produced in the selected gas phase reactor) + $\Sigma$ [(heat of reaction(comonomer)) · (comonomer content of product produced in the selected gas phase reactor)], and

wherein the upstream reactor is the reactor located directly upstream of the selected gas phase reactor (1).

2. Process according to claim 1, wherein the first reactor is a slurry reactor, the slurry reactor preferably being a loop reactor.

3. Process according to any one of the preceding claims, wherein the multistage reactor system comprises the first reactor and two or three gas phase reactors downstream of the first reactor.

4. Process according to any one of the preceding claims, wherein the multistage reactor system comprises a prepolymerisation reactor upstream of the first reactor, the prepolymerisation reactor preferably being a loop reactor.

5. Process according to any one of the preceding claims, wherein the selected gas phase reactor (1) is operated in condensed mode.

6. Process according to any one of the preceding claims, wherein the circulation gas further comprises hydrogen.

7. Process according to any one of the preceding claims, wherein the circulation gas further comprises a comonomer.

8. Process according to claim 7, wherein the comonomer comprises ethylene, 1-butene, 1-hexene and/or 1-octene.

9. Process according to any one of the preceding claims, wherein the controlling in step d) is done by adjusting a bed level in the selected gas phase reactor and/or by adjusting a propylene partial pressure in the selected gas phase reactor and/or by adjusting a comonomer partial pressure in the selected gas phase reactor (1) and/or adjusting a bed temperature of the selected gas phase reactor (1).

10. Process according to any one of the preceding claims, wherein the circulation gas compressor (2) is located downstream of the selected gas phase reactor (1) or wherein the circulation gas compressor (2) is located upstream of the selected gas phase reactor (1).

11. Process according to any one of the preceding claims, wherein the circulation gas cooler (3) is a heat exchanger, preferably a heat exchanger with a closed loop cooling circuit.

12. Process according to any one of the preceding claims, wherein the one or more gas phase reactor(s) comprise means for feeding propylene and/or comonomer and/or hydrogen into the one or more gas phase reactor(s).

13. Process according to any one of the preceding claims, wherein the first reactor comprises means for feeding propylene and/or comonomer and/or hydrogen into the first reactor.

14. Process according to any one of the preceding claims, wherein the cooling medium (cm) has a temperature $T_{cm\_in}$ at the cooling medium inlet (3a) of the circulation gas cooler (3) of between 40 °C and 60 °C, preferably 45 °C to 55 °C.

15. Process according to any one of the preceding claims, wherein the cooling medium (cm) comprises, or consists of, water.

**Patentansprüche**

1. Verfahren zum Steuern der Produktionsrate eines Propylen-Homo- oder Copolymers in einem ausgewählten Gasphasenreaktor (1) eines mehrstufigen Reaktorsystems, wobei das mehrstufige Reaktorsystem einen ersten Reaktor und einen oder mehrere Gasphasenreaktoren stromabwärts von dem ersten Reaktor umfasst, wobei jeder Gasphasenreaktor mit einer Gaszirkulationsleitung (5), einem Zirkulationsgaskompressor (2) und einem Zirkulationsgaskühler (3) ausgestattet ist, wobei der Zirkulationsgaskühler (3) einen Kühlmitteleinlass (3a), einen Kühlmittelauslass (3b) und einen Kühlkreis (3c) umfasst,

wobei das Verfahren die folgenden Schritte umfasst:

a) Polymerisieren von Propylen und einem optionalen Comonomer in dem ersten Reaktor und dem einen oder den mehreren Gasphasenreaktoren,

wobei in jedem Gasphasenreaktor ein Polypropylen-Homo- oder Copolymer erzeugt wird durch das Zuführen eines Zirkulationsgases über die Gaszirkulationsleitung (5) in den Gasphasenreaktor und das gleichzeitige Führen eines Kühlmittels (cm) durch den Kühlkreis (3c) des Zirkulationsgaskühlers (3), wobei das Kühlmittel (cm) eine Temperatur $T_{in}$ an dem Kühlmitteleinlass (3a) des Zirkulationsgaskühlers (3) und eine Temperatur $T_{out}$ an dem Kühlmittelauslass (3b) des Zirkulationsgaskühlers (3) aufweist, wobei das Zirkulationsgas Propylen und ein optionales Comonomer umfasst und wobei das Zirkulationsgas durch einen indirekten Wärmetausch mit dem Kühlmittel (cm) in dem Kühlkreis (3c) des Zirkulationsgaskühlers (3) gekühlt wird,

b) Auswählen eines Gasphasenreaktors (GPR) aus dem einen oder den mehreren Gasphasenreaktoren des mehrstufigen Reaktorsystems als des ausgewählten Gasphasenreaktors (1),
c) Berechnen der Produktionsrate Z - X (kg/h) des in dem ausgewählten Gasphasenreaktor (1) erzeugten Propylen-Homo- oder Copolymers durch die Formel (1)

$$Z - X = \frac{P - ( R + (Y - X) \cdot \Delta H_{Y-X} + X \cdot \Delta H_X)}{E}$$

d) Steuern der Produktionsrate Z - X (kg/h) des in dem ausgewählten Gasphasenreaktor (1) erzeugten Propylen-Homo- oder Copolymers unter Verwendung der in Schritt c) berechneten Produktionsrate Z - X (kg/h),

wobei:

Gesamtproduktion Z des festen Propylen-Homo- oder Copolymers (kg/h) = (Zufuhr in alle Reaktoren des mehrstufigen Reaktorsystems) - (aus allen Reaktoren des mehrstufigen Reaktorsystems entnommene Flüssigkeiten und Gas),
$P = \Delta T_{cm} \cdot Cp_{cm} \cdot MF_{cm}$, wobei $\Delta T_{cm} = T_{cm\_out} - T_{cm\_in}$ des Kühlmittels (cm) an dem Zirkulationsgaskühler in °C des ausgewählten Gasphasenreaktors (GPR),
$Cp_{cm}$ ist die spezifische Wärmekapazität (J kg$^{-1}$ °C$^{-1}$) des Kühlmittels (cm) in dem Kühlkreis des ausgewählten Gasphasenreaktors (GPR),

MF$_{cm}$ ist der Massenfluss (kg/h) des Kühlmittels (cm) in dem Kühlkreis des ausgewählten Gasphasenreaktors (GPR),

X ist die Produktionsrate (kg/h) des Propylen-Homo- oder Copolymers, das von dem stromaufwärts gelegenen Reaktor zu dem ausgewählten Gasphasenreaktor übertragen wird,

Y ist die Gesamtzuführrate (kg/h) von dem stromaufwärts gelegenen Reaktor zu dem ausgewählten Gasphasenreaktor,

R sind andere Lasten (kJ/h) als die Zufuhr von dem stromaufwärts gelegenen Reaktor,

$\Delta H_{Y\text{-}X}$ = Enthalpieänderung (kJ/kg) der Flüssigkeit/des Gases, das von dem stromaufwärts gelegenen Reaktor zu dem ausgewählten Gasphasenreaktor übertragen wird,

$\Delta H_X$ = Enthalpieänderung (kJ/kg) des Propylen-Homo- oder Copolymers, das von dem stromaufwärts gelegenen Reaktor zu dem ausgewählten Gasphasenreaktor übertragen wird, und

E ist die durchschnittliche Wärme der Reaktion in dem ausgewählten GPR, wobei E = Wärme der Reaktion (Propylen) · (Propylenanteil des in dem ausgewählten Gasphasenreaktor erzeugten Produkts) + $\Sigma$ [(Wärme der Reaktion (Comonomer)) · (Comonomeranteil des in dem ausgewählten Gasphasenreaktor erzeugten Produkts)],

wobei der stromaufwärts gelegene Reaktor der direkt stromaufwärts von dem ausgewählten Gasphasenreaktor (1) angeordnete Reaktor ist.

2. Verfahren nach Anspruch 1, wobei der erste Reaktor ein Suspensionsreaktor ist, wobei der Suspensionsreaktor vorzugsweise ein Schleifenreaktor ist.

3. Verfahren nach einem der vorstehenden Ansprüche, wobei das mehrstufige Reaktorsystem den ersten Reaktor und zwei oder drei Gasphasenreaktoren stromabwärts von dem ersten Reaktor umfasst.

4. Verfahren nach einem der vorstehenden Ansprüche, wobei das mehrstufige Reaktorsystem einen Vorpolymerisationsreaktor stromaufwärts von dem ersten Reaktor umfasst, wobei der Vorpolymerisationsreaktor vorzugsweise ein Schleifenreaktor ist.

5. Verfahren nach einem der vorstehenden Ansprüche, wobei der ausgewählte Gasphasenreaktor (1) in einem verdichteten Modus betrieben wird.

6. Verfahren nach einem der vorstehenden Ansprüche, wobei das Zirkulationsgas weiterhin Wasserstoff umfasst.

7. Verfahren nach einem der vorstehenden Ansprüche, wobei das Zirkulationsgas weiterhin ein Comonomer umfasst.

8. Verfahren nach Anspruch 7, wobei das Comonomer Ethylen, 1-Buten, 1-Hexen und/oder 1-Octen umfasst.

9. Verfahren nach einem der vorstehenden Ansprüche, wobei das Steuern in Schritt d) bewerkstelligt wird, indem eine Betthöhe in dem ausgewählten Gasphasenreaktor eingestellt wird und/oder indem ein Propylen-Teildruck in dem ausgewählten Gasphasenreaktor eingestellt wird und/oder indem ein Comonomer-Teildruck in dem ausgewählten Gasphasenreaktor (1) eingestellt wird und/oder indem eine Betttemperatur des ausgewählten Gasphasenreaktors (1) eingestellt wird.

10. Verfahren nach einem der vorstehenden Ansprüche, wobei der Zirkulationsgaskompressor (2) stromabwärts von dem ausgewählten Gasphasenreaktor (1) angeordnet ist oder wobei der Zirkulationsgaskompressor (2) stromaufwärts von dem ausgewählten Gasphasenreaktor (1) angeordnet ist.

11. Verfahren nach einem der vorstehenden Ansprüche, wobei der Zirkulationsgaskühler (3) ein Wärmetauscher und vorzugsweise ein Wärmetauscher mit einem Kühlkreis in der Form einer geschlossenen Schleife ist.

12. Verfahren nach einem der vorstehenden Ansprüche, wobei der eine oder die mehreren Gasphasenreaktoren Einrichtungen zum Zuführen von Propylen und/oder einem Comonomer und/oder Wasserstoff in den einen oder die mehreren Gasphasenreaktoren umfassen.

13. Verfahren nach einem der vorstehenden Ansprüche, wobei der erste Reaktor Einrichtungen zum Zuführen von Propylen und/oder einem Comonomer und/oder Wasserstoff in den ersten Reaktor umfasst.

14. Verfahren nach einem der vorstehenden Ansprüche, wobei das Kühlmittel (cm) eine Temperatur $T_{cm\_in}$ an dem Kühlmitteleinlass (3a) des Zirkulationsgaskühlers (3) zwischen 40 °C und 60 °C und vorzugsweise 45 °C und 55 °C aufweist.

**15.** Verfahren nach einem der vorstehenden Ansprüche, wobei das Kühlmittel (cm) Wasser umfasst oder daraus besteht.

**Revendications**

**1.** Procédé de commande du taux de production d'un homo- ou copolymère de propylène dans un réacteur en phase gazeuse sélectionné (1) d'un système de réacteurs à plusieurs étages, le système de réacteurs à plusieurs étages comprenant un premier réacteur et un ou plusieurs réacteurs en phase gazeuse en aval du premier réacteur, dans lequel chaque réacteur en phase gazeuse est équipé d'une conduite de circulation de gaz (5), d'un compresseur de gaz de circulation (2) et d'un refroidisseur de gaz de circulation (3), dans lequel le refroidisseur de gaz de circulation (3) comprend une entrée d'agent de refroidissement (3a), une sortie d'agent de refroidissement (3b) et un circuit de refroidissement (3c),

le procédé comprenant les étapes suivantes :

a) la polymérisation de propylène et d'un comonomère facultatif dans le premier réacteur et dans les un ou plusieurs réacteurs en phase gazeuse,
dans lequel, dans chaque réacteur en phase gazeuse, un homo- ou copolymère de polypropylène est produit en alimentant le réacteur en phase gazeuse avec un gaz de circulation via la conduite de circulation de gaz (5) et en alimentant en même temps l'agent de refroidissement (cm) via le circuit de refroidissement (3c) du refroidisseur de gaz de circulation (3), dans lequel l'agent de refroidissement (cm) a une température $T_{in}$ à l'entrée d'agent de refroidissement (3a) du refroidisseur de gaz de circulation (3) et une température $T_{out}$ à la sortie d'agent de refroidissement (3b) du refroidisseur de gaz de circulation (3), dans lequel le gaz de circulation comprend du propylène et un comonomère facultatif et dans lequel le gaz de circulation est refroidi par échange de chaleur indirect avec l'agent de refroidissement (cm) dans le circuit de refroidissement (3c) du refroidisseur de gaz de circulation (3),
b) la sélection d'un réacteur en phase gazeuse (RPG) parmi les un ou plusieurs réacteurs en phase gazeuse du système de réacteurs à plusieurs étages en tant que réacteur en phase gazeuse sélectionné (1),
c) le calcul du taux de production Z - X (kg/h) de l'homo- ou du copolymère de propylène produit dans le réacteur en phase gazeuse sélectionné (1) par la formule (1)

$$Z - X = \frac{P - (R + (Y - X) \cdot \Delta H_{Y-X} + X \cdot \Delta H_X)}{E}$$

d) la commande du taux de production Z - X (kg/h) de l'homo- ou du copolymère de propylène produit dans le réacteur en phase gazeuse sélectionné (1) en utilisant le taux de production calculé Z - X (kg/h) de l'étape c),

dans lequel
production totale Z d'homopolymère ou de copolymère de propylène solide (kg/h) = (alimentation de tous les réacteurs du système de réacteurs à plusieurs étages) - (liquides et gaz prélevés dans tous les réacteurs du système de réacteurs à plusieurs étages),
$P = \Delta T_{cm} \cdot Cp_{cm} \cdot MF_{cm}$, avec $\Delta T_{cm} = T_{cm\_out} - T_{cm\_in}$ de l'agent de refroidissement (cm) au niveau du refroidisseur de gaz de circulation en °C du réacteur en phase gazeuse (RPG) sélectionné,
$Cp_{cm}$ étant la capacité thermique spécifique (J kg$^{-1}$ °C$^{-1}$) de l'agent de refroidissement (cm) dans le circuit de refroidissement du réacteur en phase gazeuse (RPG) sélectionné,
$MF_{cm}$ étant le débit massique (kg/h) de l'agent de refroidissement (cm) dans le circuit de refroidissement du réacteur en phase gazeuse (RPG) sélectionné,
taux de production X (kg/h) d'homo- ou de copolymère de propylène transféré du réacteur en amont au réacteur en phase gazeuse sélectionné,
taux d'alimentation total Y (kg/h) du réacteur en amont vers le réacteur en phase gazeuse sélectionné,
charges R (kJ/h) autres que l'alimentation provenant du réacteur en amont,
$\Delta H_{y-x}$ = variation d'enthalpie (kJ/kg) du liquide / gaz transféré du réacteur en amont au réacteur en phase gazeuse sélectionné,
$\Delta H_x$ = variation d'enthalpie (kJ/kg) de l'homo- ou du copolymère de propylène transféré du réacteur en amont au réacteur en phase gazeuse sélectionné, et E est la chaleur moyenne de réaction dans le RPG sélectionné, avec E = chaleur de réaction (propylène) - (teneur en propylène du produit formé dans le réacteur en phase gazeuse sélectionné) + ∑ [(chaleur de réaction (comonomère)) - (teneur en comonomère du produit formé dans le réacteur en phase gazeuse sélectionné)], et

dans lequel le réacteur en amont est le réacteur situé directement en amont du réacteur en phase gazeuse sélectionné (1).

2. Procédé selon la revendication 1, dans lequel le premier réacteur est un réacteur à suspension, le réacteur à suspension étant de préférence un réacteur à boucle.

3. Procédé selon l'une quelconque des revendications précédentes, dans lequel le système de réacteurs à plusieurs étages comprend le premier réacteur et deux ou trois réacteurs en phase gazeuse en aval du premier réacteur.

4. Procédé selon l'une quelconque des revendications précédentes, dans lequel le système de réacteurs à plusieurs étages comprend un réacteur de prépolymérisation en amont du premier réacteur, le réacteur de prépolymérisation étant de préférence un réacteur à boucle.

5. Procédé selon l'une quelconque des revendications précédentes, dans lequel le réacteur en phase gazeuse (1) sélectionné est utilisé en mode condensé.

6. Procédé selon l'une quelconque des revendications précédentes, dans lequel le gaz de circulation comprend en outre de l'hydrogène.

7. Procédé selon l'une quelconque des revendications précédentes, dans lequel le gaz de circulation comprend en outre un comonomère.

8. Procédé selon la revendication 7, dans lequel le comonomère comprend de l'éthylène, du 1-butène, du 1-hexène et/ou du 1-octène.

9. Procédé selon l'une quelconque des revendications précédentes, dans lequel la commande à l'étape d) est effectuée en ajustant un niveau de lit dans le réacteur en phase gazeuse sélectionné et/ou en ajustant une pression partielle de propylène dans le réacteur en phase gazeuse sélectionné et/ou en ajustant une pression partielle de comonomère dans le réacteur en phase gazeuse sélectionné (1) et/ou en ajustant une température de lit du réacteur en phase gazeuse sélectionné (1).

10. Procédé selon l'une quelconque des revendications précédentes, dans lequel le compresseur de gaz de circulation (2) est situé en aval du réacteur en phase gazeuse sélectionné (1) ou dans lequel le compresseur de gaz de circulation (2) est situé en amont du réacteur en phase gazeuse sélectionné (1).

11. Procédé selon l'une quelconque des revendications précédentes, dans lequel le refroidisseur de gaz de circulation (3) est un échangeur de chaleur, de préférence un échangeur de chaleur avec un circuit de refroidissement en boucle fermée.

12. Procédé selon l'une quelconque des revendications précédentes, dans lequel lesdits un ou plusieurs réacteurs en phase gazeuse comprennent des moyens d'alimentation en propylène et/ou en comonomère et/ou en hydrogène dans les un ou plusieurs réacteurs en phase gazeuse.

13. Procédé selon l'une quelconque des revendications précédentes, dans lequel le premier réacteur comprend des moyens d'alimentation en propylène et/ou en comonomère et/ou en hydrogène dans le premier réacteur.

14. Procédé selon l'une quelconque des revendications précédentes, dans lequel l'agent de refroidissement (cm) présente une température $T_{cm\_in}$ à l'entrée d'agent de refroidissement (3a) du refroidisseur de gaz de circulation (3) comprise entre 40 °C et 60 °C, de préférence entre 45 °C et 55 °C.

15. Procédé selon l'une quelconque des revendications précédentes, dans lequel l'agent de refroidissement (cm) comprend de l'eau, ou est constitué d'eau.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0241947 A
- WO 2017025331 A
- EP 0887379 A
- WO 9212182 A
- WO 2004000899 A
- WO 2004111095 A
- WO 9924478 A
- WO 9924479 A
- WO 0068315 A
- US 4582816 A
- US 3405109 A
- US 3324093 A
- EP 479186 A
- US 5391654 A